# EUROPEAN PATENT SPECIFICATION

(11) **EP 0 283 073 B1**
(45) Date of publication and mention of the grant of the patent: **18.11.1993**
(21) Application number: 88200361.9
(22) Date of filing: 26.02.1988
(51) Int. Cl.: C07F 9/20

(54) **Process for the preparation of phosphorothioic dichlorides**
Verfahren zur Herstellung von Thiophosphorsäure-Dichloriden
Procédé de préparation de dichlorures de l'acide thiophosphorique

(30) Priority: 18.03.1987 US 27234
(43) Date of publication of application: 21.09.1988
(73) Proprietor: SHELL INTERNATIONALE RESEARCH MAATSCHAPPIJ B.V., 2596 HR Den Haag (NL)
(72) Inventor: Fahmy, Mohamed Abdel Hamid, Wilmington Delaware 19803 (US); Sanborn, James Russell, Wilmington Delaware 19711 (US)
(74) Representative: Allam, Peter Clerk

(56) References cited:
- CH-A- 574 966
- DD-B- 123 096
- DE-B- 1 161 556

## Description

This invention relates to a process for the preparation of phosphorothioic dichlorides.

The following process is disclosed in EP-A-160,344: 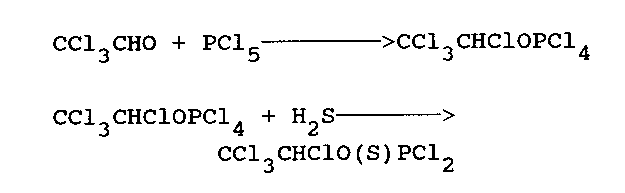
the sequence of reactions being expressed in terms of desired intermediate and final reaction products only. The same general process is disclosed in East German patent 123,096, except that a broader range of aldehydes than chloral (CCl₃CHO) is used.
V.M. Schnell, G. Erfurt, and H. Zinner,
J. Prakt. Chemie, 319 (1977) pp. 723-726 also discloses the reaction as follows: 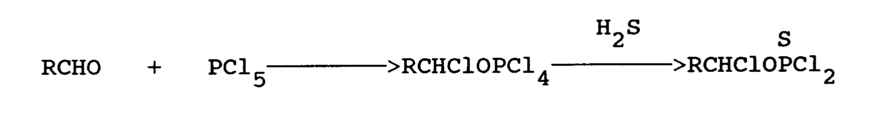
wherein R is polyhaloalkyl, preferably CCl₃ and CHCl₂. One disadvantage of the process disclosed in these publications is the use of H₂S as a sulfurizing agent, the disadvantage arising from the extreme toxicity of H₂S, requiring extreme care in transportation, if necessary, and handling. Another disadvantage arises from the need to use PCl₅ which as a solid usually requires the use of elevated temperatures in order to keep this reactant in solution.

G. Schrader discloses in German Patent 1,161,556 (1964) and in Organic Phosphorus Compounds, 7 (1976), edited by G. Kosolapoff and L. Maier, on page 504, the use of sulfur monochloride as a sulfurizing agent in the following reaction:

3s-BuOPCl₂ + S₂Cl₂→2s-BuOP(S)Cl₂ + P(O)Cl₃ + s-BuCl

The present invention provides a process for preparing phosphorothioic dichlorides, characterised by reacting a compound of the formula RCHO, wherein R is an alkyl or haloalkyl moiety, with PCl₃ and sulfur monochloride in the presence of a catalytic amount of chloride ion, in the liquid phase and under anhydrous conditions, to produce a compound of the formula RCHClOP(S)Cl₂, the amounts of PCl₃ and sulfur monochloride being at least equimolar with respect to the amount of compound of the formula RCHO present.

In its simplest form, the process can be represented by the following equation: 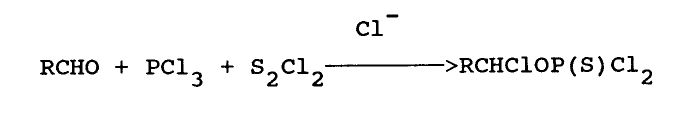
wherein R is as defined above. Sulfur monochloride is a safer sulfurizing agent than H₂S.

The process of the invention can be conducted at atmospheric pressure but is preferably conducted under N₂ blanket to exclude the presence of moisture so as to lessen the possibility for unwanted side reactions.

The process may be conducted in any suitable reactor which presents a surface to the reaction which is inert to the reaction under the conditions of operation. Inert materials for reactor lining or reactor construction include glass and any of the metals normally inactive, e.g. stainless steel.

The order of addition of the reactants to the reaction zone within the reactor is not critical, in that all of the three reactants can be added simultaneously and all three reactants can be present in the reaction zone at the same time. In one preferred embodiment, however, the compound of the formula RCHO is added to the remaining reactants and catalyst in the liquid phase. Thus PCl₃ and sulfur monochloride are added first to the reaction zone, followed by gradual addition of the compound RCHO to the reaction zone to lessen the rate of heat evolution caused by the reaction. There is no need to withhold the sulfurizing agent while the other reactants react as in the sequential reactions disclosed in the prior publications referred to above.

Generally, the reaction may conveniently be effected at a temperature in the range -30 to +40°C. Lower temperatures are more difficult to achieve and do not provide any advantage. Higher temperatures can lead to unwanted side-reactions which can lessen the yield of the desired phosphorothioic dichloride. A preferred temperature range is from -20 to +25°C.

The PCl₃ reactant can provide the liquid phase within which the reaction occurs, the other reactants being soluble in PCl₃. Excess PCl₃ and sulfur monochloride may be used.

However, if desired, an inert organic solvent for the reactants may be present. The organic solvent will typically be an aprotic solvent such as dichloromethane, chloroform, carbon tetrachloride, toluene, or benzene. To aid in the reaction, the liquid phase may be stirred while the reaction is occurring. Preferably, the solvent selected will also be one in which the phosphorothioic dichloride reaction product is soluble.

The reaction is carried out under anhydrous conditions, i.e. precautions should be taken to exclude water from the reactor and the reactants in the process, so as to minimize unwanted side-reactions.

The R group of the RCHO reactant can be any alkyl or haloalkyl moiety that is inert to the reaction. R is preferably a C₁₋₆ alkyl or C₁₋₆ haloalkyl, especially C₁₋₆ chloroalkyl, group. Surprisingly, the aldehydic carbon atom in the RCHO reactant is monochlorinated to become RCHClO- in the reaction product, and is not dichlorinated as disclosed in the aldehyde/PCl₅ reaction disclosed in Nikolenco and Popov, J.Gen.Chem., USSR 32, 29 (1962) wherein HCl is a resultant by-product. The simplest R group is CCl₃ whereby the reactant is CCl₃CHO commonly known as chloral. Examples of additional specific R groups include C(CH₃)₃-, CHCl₂- and CH₃CH₂-.

The sulfur monochloride reactant provides the reactive group SCl but this reactant is normally provided to the reaction as the dimer S₂Cl₂, which can also be represented as ClSSCl. Thus the sulfur monochloride may be provided in the form of the aforesaid dimer wherein the chloride and sulfur atoms are present in stoichiometric proportions. However sulfur monochloride may also be generated in situ by providing a chlorosulfane wherein excess sulfur may be present, which may be represented by the formula ClS(Sₙ)SCl, wherein n is an integer, Sₙ representing the stoichiometric excess.

The chloride ion catalyst can be provided by a chloride-containing compound such as quaternary ammonium chloride, quaternary phosphonium chloride, quaternary sulfonium chloride, and cyclic or acylic polyethyleneoxy ether chloride salt complexes or a mixture thereof. A preferred catalyst compound for economic reasons is benzyltributyl ammonium chloride. The chloride-containing compound need only provide chloride ion to the reaction but is otherwise inert to the reaction.

The amount of chloride ion present is conveniently from 0.1 to 5 mol % of the amount of compound of the formula RCHO present, although 10 mol % or more may be present.

The resultant phosphorothioic dichloride (RCHClO(S)PCl₂) has insecticidal properties and may be used as an intermediate to make other insecticides by reaction with alcohol, phenol, thiophenol, or mercaptan as disclosed in East German Patents 107,581 and 123,096.

Preferably, the phosphorothioic dichloride reaction product of the process has the identity CCl₃CHClO(S)PCl₂ and this is further reacted with ethanol to make O,O-diethyl-O-(1,2,2,2-tetrachloroethyl) phosphorothioate as described in EP-A-160,344.

The invention will be further understood from the following Examples, in which parts are by weight unless otherwise indicated.

### EXAMPLE 1

To a 100 ml. 3-neck glass flask fitted with a stirrer and N₂ blanket, was added 23.6 g (0.17 mol) of PCl₃ and 8.1 g (0.06 mol) of sulfur monochloride and the flask was cooled to -5°C. To the flask was then added 0.47 g (0.0015 mol) of benzyltributyl ammonium chloride and, dropwise, over a period of about two minutes, 4.48 g (0.03 mol) of chloral which had been previously distilled over H₂SO₄. The reaction mixture was stirred at -5°C for 5 to 6 hours and then diluted with hexane. The resultant solution was filtered and concentrated under vacuum. The liquid residue was again diluted with hexane and filtered, and the filtrate was concentrated under vacuum to yield a yellow liquid. This liquid was distilled in a Kugelrohr apparatus (75°C, 0.03 mm Hg, 4Pa) yielding a yellow liquid which was predominantly CCl₃CHClO(S)PCl₂ as confirmed by NMR and GC-MS data. NMR (CDCl₃), δ 6.65 (d, 1H, J=14)

### EXAMPLE 2

To a solution stirred under nitrogen at -10°C of 170 ml 2 molar PCl₃ in CH₂Cl₂ was added 1.8 g (0.006 mol) of benzyltributyl ammonium chloride and 15.68 g (0.116 mol) of sulfur monochloride. To this reaction mixture was added dropwise over a period of about one minute 5 g (0.058 mol) of pivaldehyde. Stirring of the reaction mixture was continued at -5°C for about 18 hours. The resultant solution was concentrated under vacuum and the liquid residue was diluted with hexane and filtered. The filtrate was concentrated under vacuum and the resultant residue was distilled in a Kugelrohr apparatus (50°C, 0.03 mm Hg, 4 Pa) to give a yellow oil having the formula C(CH₃)₃CHClO(S)PCl₂ as confirmed by NMR spectral data. NMR (CDCl₃),δ 6.12 (d, 1H, J=14), 1.10 (s, 9H).

### EXAMPLE 3

A 1 litre 3-neck flask equipped with a mechanical stirrer, addition funnel, thermometer and N₂ inlet was charged with 250 ml of 2.0 molar PCl₃ in CH₂Cl₂ (0.5 mol of PCl₃), 23.2 g (0.17 mol) of sulfur monochloride, and 2.69 g (0.0086 mol) of benzyltributyl ammonium chloride. This mixture was cooled to -5°C and 5 g of propionaldehyde (0.086 mol) was added dropwise over a period of about one minute. The resulting solution was stirred at -10°C overnight and then concentrated under vacuum, diluted with hexane and filtered. The filtrate was concentrated and distilled in a Kugelrohr apparatus (0.15 mm Hg, 20 Pa) to give a yellow liquid shown by NMR to be the desired compound CH₃CH₂CHClO(S)PCl₂.
NMR (CDCL₃),δ 6.35 (dt, 1H, J=14, J=5), 2.18 (m,2H), 1.12 (t, 3H, J=7) b.p. 75-80°C.

## Claims

1. A process for the preparation of phosphorothioic dichlorides characterised by reacting a compound of the formula RCHO, wherein R is an alkyl or haloalkyl moiety, with PCl₃ and sulfur monochloride in the presence of a catalytic amount of chloride ion in the liquid phase and under anhydrous conditions to produce a compound of formula RCHClOP(S)Cl₂, the amounts of PCl₃ and sulfur monochloride being at least equimolar with respect to the amount of compound of the formula RCHO present.

2. A process according to Claim 1 wherein reaction is effected at a temperature in the range -30 to 40°C.

3. A process according to Claim 1 or 2 wherein the amount of chloride ion present is from 0.1 to 5 mol % of the amount of compound of the formula RCHO present.

4. A process according to any one of Claims 1 to 3 wherein the compound of the formula RCHO is added to the remaining reactants and catalyst in the liquid phase.

5. A process according to any one of Claims 1 to 4 wherein the liquid phase is provided by the PCl₃ reactant.

6. A process according to any one of Claims 1 to 4 wherein an inert organic solvent for the reactants is present.

7. A process according to any one of Claims 1 to 6 wherein the chloride ion is provided by at least one compound selected from the group consisting of quaternary ammonium, phosphonium, or sulfonium chlorides and polyethyleneoxy ether chloride salt complexes.

8. A process according to any one of Claims 1 to 7 wherein R is a C₁₋₆ alkyl or C₁₋₆ chloroalkyl group.

9. A process according to any one of Claims 1 to 8 wherein R is CCl₃.

## Patentansprüche

1. Verfahren zur Herstellung von Thiophosphorsäuredichloriden, dadurch gekennzeichnet, daß eine Verbindung der Formel RCHO, worin R für eine Alkyl- oder Halogenalkylgruppe steht, mit PCl₃ und Schwefelmonochlorid in Anwesenheit einer katalytischen Menge von Chloridionen in flüssiger Phase und unter wasserfreien Bedingungen zu einer Verbindung der Formel RCHClO P(S)Cl₂ umgesetzt wird, wobei die Mengen an PCl₃ und Schwefelmonochlorid wenigstens äquimolar hinsichtlich der Menge an vorliegender Verbindung der Formel RCHO sind.

2. Verfahren nach Anspruch 1, worin die Umsetzung bei einer Temperatur im Bereich -30 bis 40°C ausgeführt wird.

3. Verfahren nach Anspruch 1 oder 2, worin die Menge an vorliegendem Chloridion von 0,1 bis 5 Mol-% der Menge an vorliegender Verbindung RCHO beträgt.

4. Verfahren nach einem der Ansprüche 1 bis 3, worin die Verbindung der Formel RCHO zu den restlichen Reaktanten und zum Katalysator in flüssiger Phase Zugesetzt wird.

5. Verfahren nach einem der Ansprüche 1 bis 4, worin die flüssige Phase durch den PCl₃-Reaktanten gebildet wird.

6. Verfahren nach einem der Ansprüche 1 bis 4, worin ein inertes organisches Lösungsmittel für die Reaktanten vorliegt.

7. Verfahren nach einem der Ansprüche 1 bis 6, worin das Chloridion durch wenigstens eine Verbindung,ausgewählt aus der aus quaternären Ammonium-, Phosphonium- oder Sulfoniumchloriden und Polyethylenoxyetherchloridsalzkomplexen bestehenden Gruppe, gebildet wird.

8. Verfahren nach einem der Ansprüche 1 bis 7, worin R eine C₁₋₆-Alkyl- oder C₁₋₆-Chloralkylgruppe bedeutet.

9. Verfahren nach einem der Ansprüche 1 bis 8, worin R für CCl₃ steht.

## Revendications

1. Un procédé pour la préparation de dichlorures phosphorothioïques, caractérisé en ce qu'on fait réagir un composé de la formule RCHO, dans laquelle R est une portion alcoyle ou haloalcoyle, avec PCl₃ et du monochlorure de soufre en présence d'une quantité catalytique d'ion chlorure, dans la phase liquide et dans des conditions anhydres, pour produire un composé de la formule RCHClOP(S)Cl₂, les quantités de PCl₃ et de monochlorure de soufre étant au moins équimolaires par rapport à la quantité de composé de la formule RCHO présente.

2. Un procédé selon la revendication 1, dans lequel la réaction est conduite à une température comprise entre -30 et 40°C.

3. Un procédé selon la revendication 1 ou 2, dans lequel la quantité d'ion chlorure présente est comprise entre 0,1 et 5 moles % par rapport à la quantité de composé de la formule RCHO présente.

4. Un procédé selon l'une quelconque des revendications 1 à 3, dans lequel le composé de la formule RCHO est ajouté aux autres corps en réaction et au catalyseur dans la phase liquide.

5. Un procédé selon l'une quelconque des revendications 1 à 4, dans lequel la phase liquide est fournie par le corps en réaction PCl₃.

6. Un procédé selon l'une quelconque des revendications 1 à 4, dans lequel un solvant organique inerte pour les corps en réaction est présent.

7. Un procédé selon l'une quelconque des revendications 1 à 6, dans lequel l'ion chlorure est fourni par au moins un composé choisi dans le groupe constitué par les chlorures d'ammonium, phosphonium ou sulfonium quaternaire et les sels complexes chlorures de polyéthylèneoxy éthers.

8. Un procédé selon l'une quelconque des revendications 1 à 7, dans lequel R est un groupe alcoyle en C₁₋₆ ou un groupe chloroalcoyle en C₁₋₆.

9. Un procédé selon l'une quelconque des revendications 1 à 8, dans lequel R est CCl₃.
